# EUROPEAN PATENT APPLICATION

(11) **EP 3 926 772 A1**
(43) Date of publication of application: **22.12.2021**
(21) Application number: 20180294.9
(22) Date of filing: 16.06.2020
(51) Int. Cl.: H02B 13/035, H02B 13/02, H02B 11/12, H01R 11/09, H01R 11/12, H01R 31/02, H01R 101/00

(54) **ELECTRICAL SWITCHGEAR WITH IMPROVED ELECTRICAL CONNECTION DEVICE**

(71) Applicant: ABB Schweiz AG, 5400 Baden (CH)
(72) Inventor: Peracchi, Fabrizio, I-24021 Albino (BG) (IT); Arvati, Andrea, I-24027 Nembro (BG) (IT)
(74) Representative: Giavarini, Francesco

(57) **Abstract**

An electrical switchgear (100), in particular a Medium Voltage electrical switchgear, comprising an enclosure (101) containing at least a main electrical circuit compartment (102, 103) and a conductive cable compartment (104). The electrical switchgear comprises, for each phase of said circuit, a connection device (1) positioned in said cable compartment, said connection device having a central body (2) provided with a first connecting surface (21) adapted for connection with a terminal (110) of the electrical main circuit and with a second connecting surface (22) adapted for the connection with at least a terminal (109) of a conductive cable (108), said central body having at opposite ends thereof a first (3) and a second (4) shaped bodies respectively having rounded surfaces (310, 320, 410, 420) outwardly protruding from said central body.

## Description

The present invention relates to an electrical switchgear, in particular a Low Voltage or Medium Voltage electrical switchgear, provided with an improved device for electrical connection between cable terminals and main circuit terminals within the switchgear.

For the purposes of the present invention, the term "Low Voltage or Medium Voltage" is used to designate operating voltages up to some tens of kV AC. Although in the present disclosure reference will be primarily made to Medium Voltage switchgears comprising a circuit breaker, the technical solution disclosed herein is applicable also to electrical switchgear in general.

It is known from the state of the art that electrical switchgears, in particular low and medium voltage switchgear, are normally divided in a number of compartments housing the different components of the switchgear. Typically, an electrical switchgear may comprise a bus-bar system compartment, an electrical apparatus - e.g. a circuit breaker - compartment, and a cable compartment.

In the cable compartment, cables, e.g. MV conducting cables, are connected to the main circuit electrical circuit terminals inside the switchgear, e.g. through the terminals of the circuit breaker, using a connecting bars system. Due to the limited space inside the compartment, it is normally not possible to keep enough distance between the phase so as to guarantee the required insulation. To this purpose, insulation partitions are normally used between the phases and between phases and earthing points to achieve the required insulation conditions.

However, in some cases, due to the relatively narrow standard width of the switchgear and the rating voltage and currents involved, it is sometimes difficult to fulfil the insulations requirements for safety operations, even in the presence of insulation partitions.

Moreover, additional equipment is normally present in the cable compartments in order to carry out additional functionalities, e.g. an earthing switch, voltage detection devices, Voltage Transformer (VT) devices to draw power for feeding one or more auxiliary devices of the switchgear. This additional equipment is normally located in different points of the cable compartments, as it is normally not possible to implement the various functionalities directly on the connecting bars system. It is worth noting that the presence of additional equipment further reduces the available space inside the cable compartment of the switchgear, thereby further worsening the insulation problems within it and/or making not possible to implement such additional functionalities required.

In practice, in a number of existing solutions for electrical switchgears, the connection system used to connect the conductive cables to the main circuit inside the switchgear is not totally satisfactory in terms of insulation performances due to available space constrains.

Moreover, the need of having a plurality of devices and equipment positioned inside the conductive cables compartments further reduce the available space and makes more complicated the assembly and maintenance of the switchgear.

The main aim of the present invention is to provide an electrical switchgear, in particular a Medium Voltage electrical switchgear that allows solving or mitigating the above-mentioned problems.

More in particular, it is an object of the present invention to provide an electrical switchgear, in particular to provide a Medium Voltage electrical switchgear, which is able to provide a reliable connection system between the terminal(s) of the conductive cable(s) and the terminal of the main circuit inside the cable compartment of the switchgear.

As a further object, the present invention is aimed at providing an electrical switchgear, in particular to provide a Medium Voltage electrical switchgear, which guarantees the required insulation between the phases and between phases and earthing points inside the cable compartment of the switchgear.

As a further object, the present invention is aimed at providing an electrical switchgear, in particular to provide a Medium Voltage electrical switchgear, in which a number of functionalities can be integrated into the connection system between the terminal(s) of the conductive cable(s) and the terminal of the main circuit inside the cable compartment of the switchgear.

As a further object, the present invention is aimed at providing an electrical switchgear in particular to provide a Medium Voltage electrical switchgear, in which the assembly and maintenance times are reduced.

Still another object of the present invention is to provide an electrical switchgear, in particular to provide a Medium Voltage electrical switchgear, which can be easily manufactured at industrial level, at competitive costs with respect to the solutions of the state of the art.

In order to fulfill these aim and objects, the present invention provides an electrical switchgear, in particular a Medium Voltage electrical switchgear, which comprises an enclosure containing at least a main circuit compartment and a conductive cable compartment. The electrical switchgear of the present disclosure is characterized in that it comprises, for each phase of said electrical circuit, a connection device positioned in said cable compartment, said connection device having a central body provided with a first connecting surface adapted for connection with a terminal of the main electrical circuit and with a second connecting surface adapted for the connection with at least a terminal of a conductive cable, said central body having at opposite ends thereof a first and a second shaped bodies respectively having rounded surfaces outwardly protruding from said central body.

In this way, it is possible to provide an improved electrical switchgear, in particular a Medium Voltage electrical switchgear, that overcomes the problems and drawbacks of the existing connection systems between the cable terminals and the main electrical circuit terminals inside the switchgear.

In practice, in the electrical switchgear according to the present disclosure, the shape of the connection device, and in particular the rounded shape of the first and second shaped bodies protruding from the central body of the connection device, influences the electrical field and allows a better control of the phase-to-phase and phase-to-earth performances inside the cable compartment of the switchgear.

In addition, as better described hereinafter, the shape of the connection device allows integrating in the connection device itself a number of additional functionalities that where previously distributed among different devices located in different positions inside the cable compartment of the switchgear.

In a preferred embodiment of the electrical switchgear of the present disclosure, the central body and said first and second shaped bodies of said connection device are preferably made in a single piece with a conductive material, e.g. aluminium or silver-plated aluminium depending on the needs (i.e., rated voltages and currents).

In various embodiments of the presently disclosed electrical switchgear, the rounded surfaces of the first and second shaped bodies of the connection device are portions of an ellipsoid surface or of a sphere surface. Other rounded surfaces are also possible, provided that they are able to bring about a more equalized electrical field around the connection device.

In particular, according to an embodiment of the electrical switchgear of the present invention, the central body of said connection device preferably extend along a longitudinal direction x in a xyz reference system. The central body of the connection device is advantageously delimited upwardly by an *xz* plane and laterally, at the opposite ends of its longitudinal extension, by a first and a second parallel planes *yz.*

Moreover, in such embodiment, said first and second shaped bodies each preferably comprises a first portion which protrudes above said *xz* plane, said first portions being provided with a first convex surface. Furthermore, the first and second shaped bodies each preferably comprises a second portion which is positioned below said *xz* plane. The second portions of the first and second shaped bodies each protrudes outwardly respectively from said first and second parallel plane *yz* with respect to said central body. Also, the second portions of the first and second shaped bodies are each provided with a second convex surface which is radiused with the first convex surface of the corresponding first portion of said first and second shaped bodies.

In other words, according to such embodiments, the first and second shaped bodies of the connection device are advantageously positioned at opposite of the central body and protrudes upwardly and outwardly with respect to it, and are each provided with a continuous rounded surface - for instance a portion of an ellipsoid surface - which improves equalizing the electrical field around the connection device.

In such a case, the central body of the connection device is conveniently shaped so that the first connecting surface advantageously lies in a *xz* plane and the second connecting surface lies in a *xy* plane perpendicular to the plane of the first connecting surface.

In embodiments of the electrical switchgear, according to the present invention, a single connection point between the connection device and a cable terminal is conveniently provided on the second connecting surface of the central body. Alternatively, a plurality of connection points between the connection device and cable terminals can be provided on the second connecting surface of the central body.

Therefore, in general, the second connecting surface of the central body of the connection device may comprise one or more connection points for connection with one or more conductive cables.

In preferred embodiments of the electrical switchgear, according to the present disclosure, in said first and/or said second shaped bodies at least a part of said rounded surfaces outwardly protruding from said central body can be carved out.

In practice, as better described hereinafter, in such embodiments the first and/or second shaped bodies are provided with carved out portions in the rounded surfaces which can be used as seats to accommodate pieces of equipment, the rounded surfaces providing an effective equalized electrical field screen all around the accommodated pieces of equipment. In particular, in preferred embodiments of the presently disclosed electrical switchgear at least a part of the second convex surface of the second portion of said first and/or said second shaped bodies can be carved out.

For instance, when an earthing switch is positioned inside the cable compartment of the electrical switchgear of the present invention, the first shaped body can be provided with a fixed contact which is adapted to be coupled with a corresponding movable contact of said earthing switch. Advantageously, said fixed contact can be conveniently housed in the carved out part of said first shaped body, in particular in the carved out part of the second portion of said first shaped body.

As a further exemplary embodiment of a connection device used in the electrical switchgear of the present invention, the second shaped body can be provided with a coupling surface which is adapted to be coupled with a voltage detection device. Advantageously, said coupling surface can be conveniently housed in the carved out part of said second shaped body, in particular in the carved out part of the second portion of said second shaped body. As a still further exemplary embodiment of a connection device used in the electrical switchgear of the present invention, the second shaped body can be provided with a connection hole which is adapted to receive the connection of a Voltage Transformer used to draw power for feeding auxiliary equipment of the electrical switchgear. Advantageously, said connection hole can be conveniently housed in the carved out portion of said second shaped body, in particular in the carved out part of the second portion of said second shaped body.

In this way, in addition to the basic function of connecting the cable terminals to the main circuit terminals inside the electrical switchgear, a number of additional functionalities can be performed by the connection device (e.g., supporting the earthing switch fixed contacts, providing the signal of voltage presence, supporting the connection of the Voltage Transformers, etc.), while providing an equalized electrical field that allows overcoming the previously described phase-to-phase and phase-to-earth insulation problems.

Further features and advantages of the invention will emerge from the description of preferred, but not exclusive embodiments of an electrical switchgear, particularly a MV switchgear, according to the invention, non-limiting examples of which are provided in the attached drawings, wherein:
- Figure 1 is a schematic side view of an embodiment of an electrical switchgear according to the invention;
- Figure 2 is a schematic side view of a detail of the cable compartment in an embodiment of an electrical switchgear according to the invention;
- Figure 3 is a first perspective view of an embodiment of a connection device used in an electrical switchgear according to the invention;
- Figure 4 is a second perspective view of an embodiment of a connection device used in an electrical switchgear according to the invention;
- Figure 5 is a first plan view of an embodiment of a connection device used in an electrical switchgear according to the invention;
- Figure 6 is a second plan view of an embodiment of a connection device used in an electrical switchgear according to the invention;
- Figure 7 is a third plan view of an embodiment of a connection device used in an electrical switchgear according to the invention;
- Figure 8 is a fourth plan view of an embodiment of a connection device used in an electrical switchgear according to the invention;
- Figure 9 is a fifth plan view of an embodiment of a connection device used in an electrical switchgear according to the invention;
- Figure 10 is a sixth plan view of an embodiment of a connection device used in an electrical switchgear according to the invention.

In the following description reference will be made to a MV electrical switchgear, the present invention being however directed more in general to Low Voltage and Medium Voltage electrical switchgears.

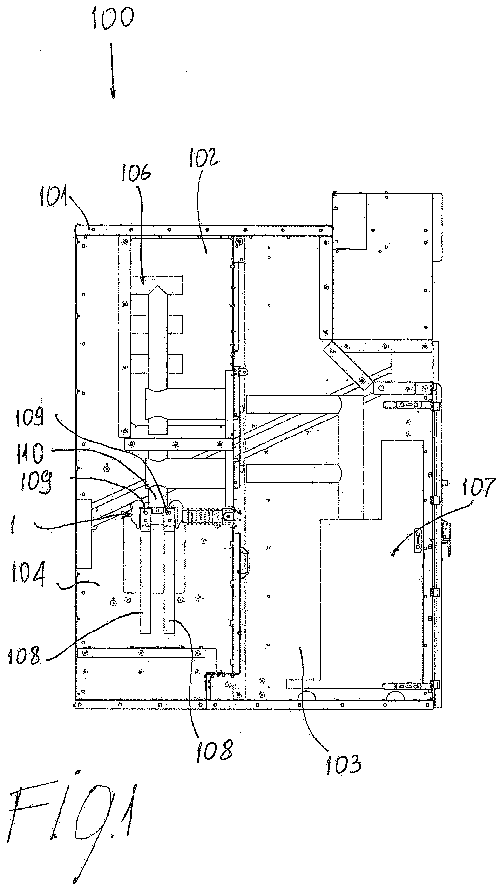

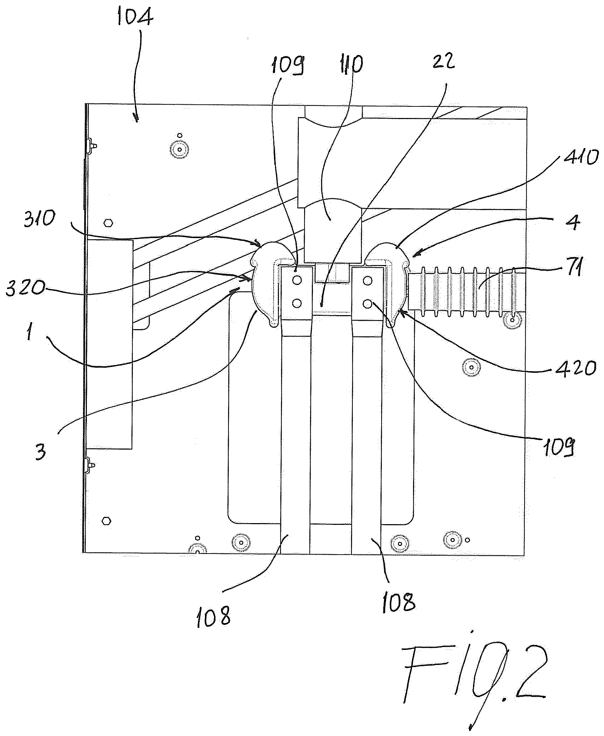

With particular reference to the attached Figures 1 and 2, in its more general definition, an electrical switchgear 100 normally comprises an enclosure 101 which contains one or more main electrical circuit compartment, for instance a bus-bar compartment 102 housing a bus-bar system 106, and a circuit breaker compartment 103 housing a circuit breaker 107.

The electrical switchgear 100 further comprises a conductive cable compartment 104 which houses, for each phase, one or more cables 108 provided with corresponding cable terminals 109. For each phase, main circuit terminals 110, e.g. circuit breaker terminals, are also housed inside the cable compartments 104.

Low Voltage and Medium Voltage electrical switchgears are well known in the art and will not be described in further details.

With particular reference to figures 1 and 2, one of the distinguishing features of the electrical switchgear 100 of the present invention is given by the fact that it comprises, for each phase of the electrical circuit, a connection device 1 which is positioned in the conductive cable compartment 104 of the switchgear 100.

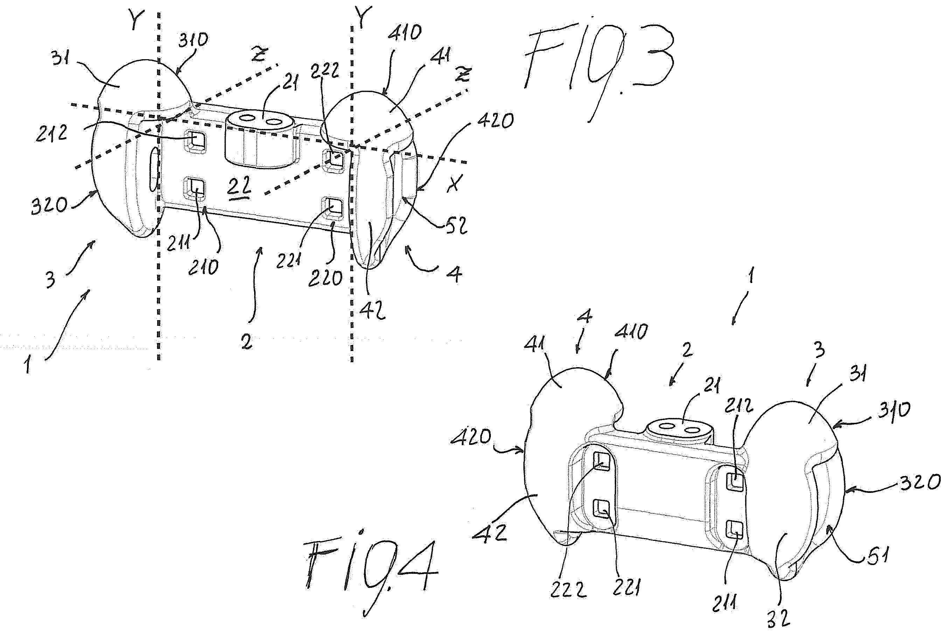

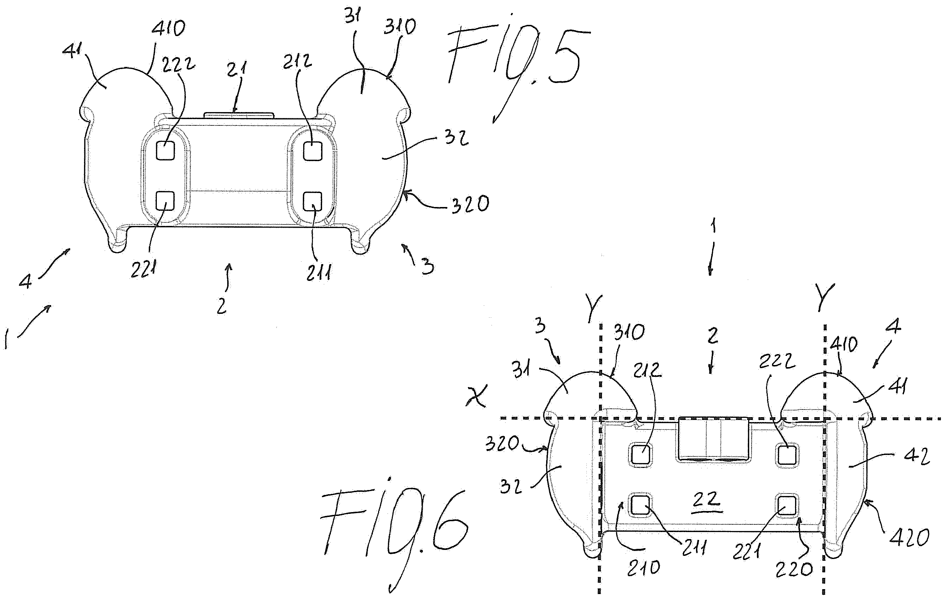

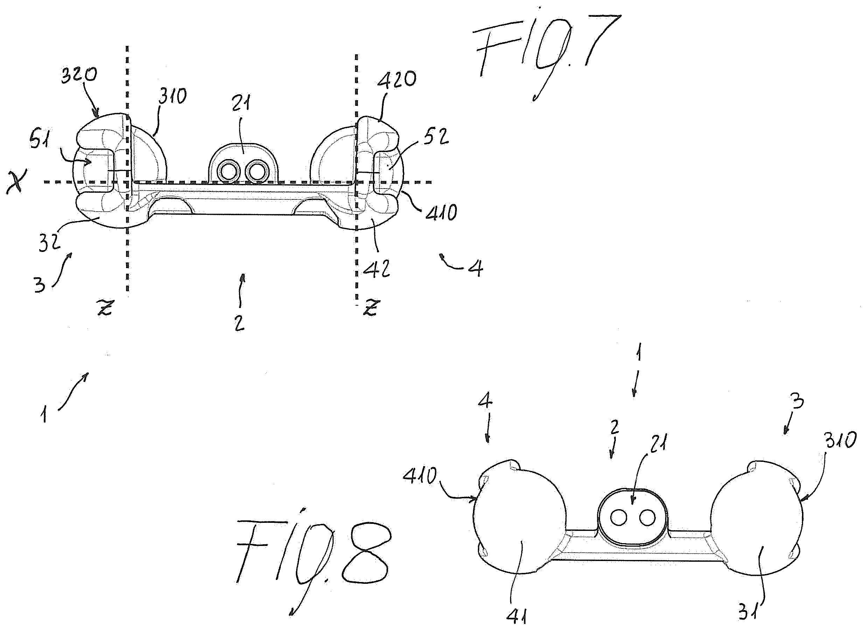

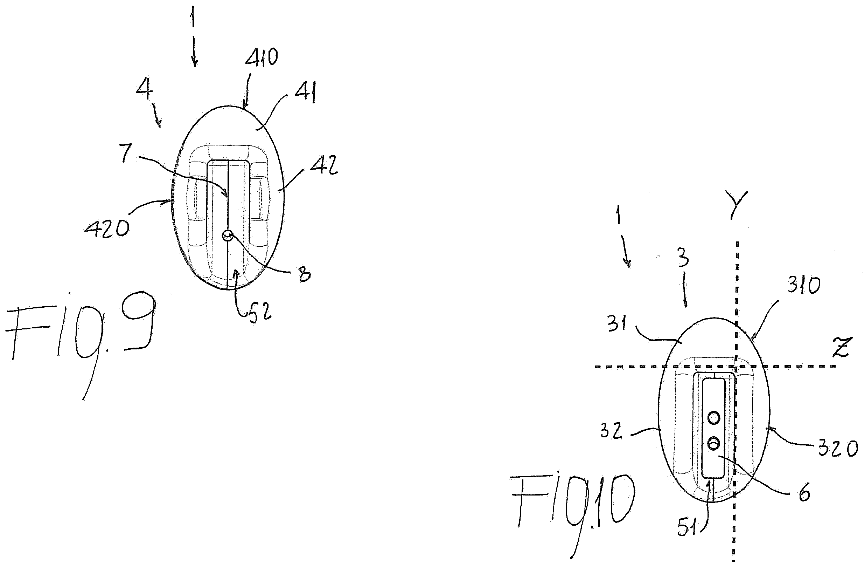

With reference to figures 3-10, said connection device 1 has a central body 2 which is provided with a first connecting surface 21 adapted for connection with a terminal 110 of the main electrical circuit, e.g. a terminal 110 of the circuit breaker 107 positioned inside the cable compartment 104.

The central body 2 of the connection device 1 is also provided with a second connecting surface 22 which is adapted for the connection with at least a terminal 109 of a conductive cable 108 also positioned inside the cable compartment 104.

As shown in the attached figures, the central body 2 of the connection device 1 is provided - at one of its longitudinal end - with a first shaped body 3 having rounded surfaces 310, 320 which protrude outwardly from said central body 2. The central body 2 of the connection device 1 is also provided with a second shaped body 4 shaped body having rounded surfaces 410,420 which protrude outwardly from said central body 2 at an opposite longitudinal end with respect to said first shaped body 3.

In the embodiment shown in the attached figure, the central body 2 and the first 3 and second 4 shaped bodies of said connection device 1 are made in a single piece with an electric conductive material. For instance, the central body 2 and the first 3 and second 4 shaped bodies can be integrally made in aluminum or its alloys. When required by particular voltage and/or current ratings, silver-plated aluminum can also be used. In general, the choice of the material depends upon cost and performances consideration. Moreover, different embodiments in which the connection device 1 is made with a number of different pieces joined together can also be foreseen, although they are less advantageous in terms of manufacturing and assembly costs and times.

The rounded surface of 310,320 and 410,420 of the first shaped body 3 and of the second shaped body 4 can be designed in various ways. For instance, the rounded surface of 310,320 and 410,420 of the shaped bodies 3 and 4 can be portions of an ellipsoid surface or of a sphere surface, the former being preferred.

As shown in the attached figures, in an embodiment of a connection device 1 used in a switchgear 100 of the present invention, the central body 2 of said connection device 1 extends along a longitudinal direction x in a xyz reference system. The central body 2 is delimited upwardly by an xz plane and laterally, at the opposite ends of its longitudinal extension along the x axis, by a first and a second parallel planes yz,

Then, the first shaped body 3 comprises a first portion 31 which protrudes above said xz plane with a first convex surface 310; likewise, the second 4 shaped body comprises a first portion 41 which protrudes above said *xz* plane with a corresponding first convex surface 410. Moreover, the first shaped body 3 comprises a second portion 32 which is positioned below said xz plane and protrudes outwardly from said first parallel plane *yz* with a second convex surface 320 which is radiused with the first convex surface 310 of the corresponding first portion 31 of said first shaped body 3.

Likewise, the second shaped body 4 comprises a second portion 42 which is positioned below said *xz* plane and protrudes outwardly from said second parallel plane *yz* in an opposite direction with respect to the second portion 32 of the first shaped body 3. The second portion 42 the second shaped body 4 is provided with a second convex surface 420 which is radiused with the first convex surface 410 of the corresponding first portion 41 of said second shaped body 4.

Thus, as shown in the attached figures, in this embodiment the first shaped body 3 and the second shaped body 4 of the connection device 1 are positioned at opposite of the central body 2 and protrudes upwardly and outwardly with respect to it. The first shaped body 3 and the second shaped body 4 are each provided with a continuous rounded surface - deriving from the combination of the first convex surfaces 310, 410 with the corresponding second convex surfaces 320, 420 which form a portion of an ellipsoid surface - which improves equalizing the electrical field around the connection device 1.

In the embodiment of the connection device 1 shown in the attached figures, the first connecting surface 21 of the central body 2 lies in a *xz* plane and the second connecting surface 22 of the central body 2 lies substantially perpendicular to said first connecting surface 21 in a *xy* plane. Other layouts of the connecting surface 21 and 22 on the central body 2 of the connection device 1 are also possible, though less advantageous in terms of space occupation and insulation effectiveness.

In the embodiment of the connection device 1 shown in the attached figures, the second connecting surface 22 of the central body 2 comprises a first 210 and a second 220 connection point for connection with the terminals 109 of a pair of conductive cables 108. A single cable connection or multiple cable connections can be foreseen, depending on the needs and the rated voltage and/or currents.

To connect the cable terminals 109 to the connection device 1, a number of holes for inserting fixing means, e.g. screw means, can be provided on the central body 2 of the connection device 1. In the embodiment shown, a pair of holes 211, 212; 221, 222, are respectively provided in correspondence of the first 210 and second 220 connection points on the central body 2. A single connection hole or multiple connection holes for each cable terminal 109 can in general be foreseen, depending on the needs and the rated voltage and/or currents. According to largely preferred embodiments of a connection device 1 used in an electrical switchgear 100 of the invention, the first shaped body 3 can be advantageously provided with carved out part 51 of the rounded surfaces 310, 320 thereof which outwardly protrudes from the central body 2. In the preferred embodiment shown in the attached figures at least a part 51 of the second convex surface 320 of the second portion 32 of said first shaped body 3 is carved out.

Similarly, the second shaped body 4 can be advantageously provided with carved out part 52 of the rounded surfaces 410, 420 thereof which outwardly protrudes from the central body 2. In the preferred embodiment shown in the attached figures at least a part 52 of the second convex surface 420 of the second portion 42 of said second shaped body 4 is carved out.

As previously pointed out, in these embodiments the first shaped body 3 and the second shaped body 4 are provided with carved out seats 51 and 52, respectively, in the corresponding rounded surfaces 310, 320 and 410, 420 in which it is possible to accommodate pieces of equipment, since the rounded surfaces 310, 320 and 410, 420 provide for an effective equalized electrical field screen all around the seats 51 and 52 and the pieces of equipment positioned in said seats 51 and 52.

In particular, in the embodiment shown in the attached figures, the first shaped body 3 is provided with a supporting surface for a fixed contact 6 which is adapted to be coupled with a corresponding movable contact of an earthing switch (not shown) which can be positioned in said cable compartment 104. Advantageously, the supporting surface for a fixed contact 6 is housed in the carved out portion 51 of the second convex surface 320 of the second portion 32 of said first shaped body 3.

In turn, the second shaped body 4 is advantageously provided with a coupling surface 7 which is adapted to be coupled with a voltage detection device. The coupling surface 7 is conveniently housed in the carved out portion 52 of the second convex surface 420 of the second portion 42 of said second shaped body 4.

Likewise, the second shaped body 4 is advantageously provided also with a connection hole 8 which is adapted to receive the connection of a Voltage Transformer for drawing power to feed auxiliary devices in the electrical switchgear 100. The connection hole 8 is also conveniently housed in the carved out portion 52 of the second convex surface 420 of the second portion 42 of said second shaped body 4

Therefore, in the embodiment shown in the attached figures, the connection device 1 used in the electrical switchgear 100 of the present invention is able to carry out a number of additional functionalities in addition to the basic function of connecting the cable terminals 109 to the main circuit terminals 110 inside the electrical switchgear 100.

In particular, in the embodiment shown in the attached figures, the connection device 1 used can be used for supporting the fixed contacts 6 of an earthing switch, for providing the signal of voltage presence through the coupling surface 7, for supporting the connection of a Voltage Transformers through the connection hole 8, while providing an equalized electrical field that allows overcoming the previously described phase-to-phase and phase-to-earth insulation problems.

Moreover, since a number of functionalities are integrated in a single device, i.e. in the connection device 1, the solution proposed for the electrical switchgear 100 of the present invention is cheaper and more reliable, allowing to reduce the assembly and maintenance times and costs of the switchgear 100.

Several variations can be made to the electrical switchgear thus conceived, all falling within the scope of the attached claims. In practice, the materials used and the contingent dimensions and shapes can be any, according to requirements and to the state of the art.

## Claims

1. An electrical switchgear (100), in particular a Medium Voltage electrical switchgear, comprising an enclosure (101) containing at least a main electrical circuit compartment (102;103) and a conductive cable compartment (104) **characterized in that** it comprises, for each phase of said electrical circuit, a connection device (1) positioned in said conductive cable compartment (104), said connection device (1) having a central body (2) provided with a first connecting surface (21) adapted for connection with a terminal (110) of the main electrical circuit and with a second connecting surface (22) adapted for the connection with at least a terminal (109) of a conductive cable (108), said central body (2) having at opposite ends thereof a first (3) and a second (4) shaped bodies respectively having rounded surfaces (310,320; 410,420) outwardly protruding from said central body (2).

2. The electrical switchgear (100), according to claim 1, **characterized in that** said central body (2) and said first (3) and second (4) shaped bodies of said connection device (1) are made in a single piece.

3. The electrical switchgear (100), according to claim 1 or 2, **characterized in that** the rounded surfaces (310,320; 410,420) of said first (3) and second (4) shaped bodies are portions of an ellipsoid surface or of a sphere surface.

4. The electrical switchgear (100), according to one or more of the previous claims, **characterized in that**, in a xyz reference system, said central body (2) of said connection device (1) extend along a longitudinal direction x and is delimited upwardly by an xz plane and laterally, at the opposite ends of its longitudinal extension, by a first and a second parallel planes *yz,* said first (3) and second (4) shaped bodies each respectively comprising a first portion (31; 41) protruding above said *xz* plane with a first convex surface (310; 410), and a second portion (32; 42) positioned below said *xz* plane and respectively protruding outwardly from said first and second parallel plane *yz* with a second convex surface (320; 420) radiused with the first convex surface (310; 410) of the corresponding first portion (31; 41) of said first (3) and second (4) shaped bodies.

5. The electrical switchgear (100), according to claim 4, **characterized in that** said first connecting surface (21) lies in a *xz* plane and said second connecting surface (22) lies in a *xy* plane.

6. The electrical switchgear (100), according to one or more of the previous claims, **characterized in that** said second connecting surface (22) of said central body (2) comprises one or more connection points (210; 220) for connection with one or more conductive cables (108).

7. The electrical switchgear (100), according to one or more of the previous claims, **characterized in that** in said first (3) and/or said second (4) shaped bodies at least a part (51; 52) of said rounded surfaces (310,320; 410,420) outwardly protruding from said central body (2) are carved out.

8. The electrical switchgear (100), according to one or more of claims 4 to 7, **characterized in that** at least a part (51; 52) of said second convex surface (320; 420) of the second portion (32; 42) of said first (3) and/or said second (4) shaped bodies is carved out.

9. The electrical switchgear (100), according to claim 7 or 8, **characterized in that** said first shaped body (3) is provided with a supporting surface for a fixed contact (6) adapted to be coupled with a corresponding movable contact of an earthing switch positioned in said cable compartment (104), said supporting surface for a fixed contact (6) being housed in the carved out portion (51) of said first shaped body (3).

10. The electrical switchgear (100), according to one or more of claims 7 to 9, **characterized in that** said second shaped body (4) is provided with a coupling surface (7) adapted to be coupled with a voltage detection device, said coupling surface (7) being housed in the carved out portion (52) of said second shaped body (4).

11. The electrical switchgear (100), according to one or more of claims 7 to 10, **characterized in that** said second shaped body (4) is provided with a connection hole (8) adapted to receive the connection of a Voltage Transformer, said connection hole (8) being housed in the carved out portion (52) of said second shaped body (4).
